# EUROPEAN PATENT APPLICATION

(11) **EP 4 531 231 A1**
(43) Date of publication of application: **02.04.2025**
(21) Application number: 23884507.7
(22) Date of filing: 22.09.2023
(51) Int. Cl.: H02J 7/00, H01M 10/44

(54) **TERMINAL DEVICE AND CHARGING CONTROL METHOD**

(30) Priority: 01.11.2022 CN 202211356011
(71) Applicant: Honor Device Co., Ltd., Shenzhen, Guangdong 518040 (CN)
(72) Inventor: TANG, Ruichao, Shenzhen, Guangdong 518040 (CN); LI, Wenbiao, Shenzhen, Guangdong 518040 (CN); ZHOU, Haibin, Shenzhen, Guangdong 518040 (CN)
(74) Representative: Epping - Hermann - Fischer
(86) International application number: PCT/CN2023/120804
(87) International publication number: WO 2024/093575

(57) **Abstract**

Embodiments of this application provide a terminal device and a charging control method, and relate to the field of terminal technologies. The terminal device includes: a controller, a hybrid power boost HPB circuit, a switch, and a battery. One end of the switch is connected to an end of the HPB circuit that receives electric power from an external charging device, the other end of the switch is connected to an end of the HPB circuit that is connected to the battery, and the HPB circuit is configured to charge the battery and supply power to a load of the terminal device. The controller is configured to: determine load power of the terminal device when the terminal device is connected to the external charging device, and control the switch to be in an ON state when the load power is less than or equal to a first preset value. In this way, the terminal device can charge the battery by using the switch without needing to use the HPB circuit, so that a loss of electrical energy during charging is reduced, thereby improving charging efficiency of the terminal device.

## Description

This application claims priority to Chinese Patent Application No. 202211356011.4, filed with the China National Intellectual Property Administration on November 1, 2022 and entitled "TERMINAL DEVICE AND CHARGING CONTROL METHOD", which is incorporated herein by reference in its entirety.

### TECHNICAL FIELD

Embodiments of this application relate to the field of terminal technologies, and in particular, to a terminal device and a charging control method.

### BACKGROUND

When electric power of a terminal device is low, an external charging device, such as a power adapter, may be used to charge the terminal device.

In some implementations, the terminal device includes a buck circuit and a hybrid power boost (hybrid power boost, HPB) circuit. When a power adapter is used to charge the terminal device, a voltage outputted from the power adapter needs to first pass through the buck circuit and then pass through the HPB circuit, so that the terminal device charges a battery of the terminal device by using the voltage outputted by the HPB circuit.

However, the foregoing terminal device undergoes a large loss of electric energy during charging, resulting in low charging efficiency.

### SUMMARY

Embodiments of this application provide a terminal device and a charging control method, to improve charging efficiency of the terminal device.

According to a first aspect, an embodiment of this application provides a terminal device. The terminal device includes: a controller, a hybrid power boost HPB circuit, a switch, and a battery. One end of the switch is connected to an end of the HPB circuit that receives electric power from an external charging device, the other end of the switch is connected to an end of the HPB circuit that is connected to the battery, and the HPB circuit is configured to charge the battery and supply power to a load of the terminal device. The controller is configured to: determine load power of the terminal device when the terminal device is connected to the external charging device, and control the switch to be in an ON state when the load power is less than or equal to a first preset value. In this way, the terminal device can charge the battery by using the switch without needing to use the HPB circuit, and less electric energy is lost by using the switch, so that a loss of electrical energy during charging is reduced, thereby improving charging efficiency of the terminal device.

In a possible implementation, the controller is further configured to: determine the load power of the terminal device when the terminal device is connected to the external charging device and the switch is in the ON state, and control the switch to switch to an OFF state when the load power is greater than the first preset value. In this way, the terminal device can supply most of the power inputted by the external charging device to the load, and power can be preferentially supplied to the load, so that the terminal device can operate stably, thereby improving user experience.

In a possible implementation, the controller is further configured to: determine the load power of the terminal device and a power level of the battery when the terminal device is connected to the external charging device and the switch is in the OFF state, and control the switch to remain in the OFF state when the load power is less than or equal to the first preset value and the power level is greater than or equal to a second preset value. In this way, because charging power of the terminal device is low when the power level of the battery is high and the load power is low, heat generated by charging the battery by using the HPB circuit is less, and less electrical energy is lost. Therefore, the controller can control the switch to remain in the OFF state, so as to improve flexibility of controlling the switch.

In a possible implementation, the controller is further configured to control the switch to be in the ON state when the terminal device is connected to the external charging device and when it is determined that the terminal device is in a standby state or a power-off state. In this way, there is no need for the controller to determine, based on the load power of the terminal device, whether to control the switch to be in the ON state, so that control efficiency of the controller is improved. Furthermore, when the terminal device is in the standby state or the power-off state, the terminal device can charge the battery by using the switch without needing to use the HPB circuit, so that charging efficiency of the terminal device can be improved.

In a possible implementation, the controller is further configured to: determine the load power of the terminal device and a power level of the battery when the terminal device is connected to the external charging device and the switch is in the ON state, and control the switch to switch to an OFF state when the load power is greater than the first preset value and the power level is less than a second preset value. In this way, when the load power is greater than the first preset value and the power level is less than the second preset value, the terminal device may supply power to the load preferentially, so that the terminal device can operate stably, thereby improving user experience.

In a possible implementation, the controller is further configured to control the switch to be in the OFF state when the terminal device is disconnected from the external charging device. In this way, when the terminal device is connected to the external charging device, there is no need to first determine a state of the switch via an I2C between the switch and the controller and then control the switch based on the switch state, so that a quantity of communications between the controller and the switch is reduced, thereby facilitating control on the switch by the controller.

In a possible implementation, the terminal device further includes a buck circuit and a bypass circuit of the buck circuit. One end of the buck circuit receives the electric power from the external charging device, the other end of the buck circuit is connected to the end of the HPB circuit that receives the electric power from the external charging device, and the buck circuit is connected in parallel to the bypass circuit. The buck circuit is configured to step down a voltage inputted by the external charging device. The controller is further configured to: determine the voltage inputted by the external charging device when the terminal device is connected to the external charging device, and control the buck circuit or the bypass circuit to operate based on the voltage. In this way, the controller controls the buck circuit or the bypass circuit to operate based on the voltage inputted by the external charging device, and the terminal device can adapt to different external charging devices, so that safety of charging the terminal device is improved.

In a possible implementation, the controller is specifically configured to: control the buck circuit to operate when the voltage is greater than or equal to a third preset value, or control the bypass circuit to operate when the voltage is less than the third preset value. In this way, when the voltage inputted by the external charging device is high, the buck circuit is controlled to step down the inputted voltage, so as to reduce an excessively high voltage stress in the circuit, thereby improving safety of charging the terminal device. In addition, when the voltage inputted by the external charging device is low, the bypass circuit may be used to charge the battery, without needing to step down the voltage by the buck circuit, so that part of electrical energy lost when the buck circuit is used is reduced, thereby improving charging efficiency of the terminal device.

In a possible implementation, the buck circuit includes a charging chip. In this way, due to high conversion efficiency of the charging chip, less electric energy is lost when the voltage inputted by the external charging device is stepped down, so that charging efficiency of the terminal device is further improved.

In a possible implementation, the terminal device further includes a ferrite bead, an over voltage protection circuit, a battery connector, and a protocol chip. A first end of the ferrite bead is connected to the external charging device, a second end of the ferrite bead is connected to a first end of the protection circuit, a second end of the protection circuit is connected to a first end of the buck circuit and a first end of the bypass circuit, a second end of the buck circuit and a second end of the bypass circuit are connected to a first end of the HPB circuit that receives the electric power from the external charging device and a first end of the switch, a second end of the HPB circuit is connected to a first end of the battery connector, a third end of the HPB circuit is connected to the load of the terminal device, a second end of the switch is connected to the second end of the HPB circuit and the first end of the battery connector, and a second end of the battery connector is connected to the battery. The first end of the HPB circuit is the end of the HPB circuit that receives the electric power from the external charging device, and the first end of the buck circuit is an end of the buck circuit that receives the electric power from the external charging device. The protocol chip is configured to negotiate the voltage inputted by the external charging device.

According to a second aspect, an embodiment of this application provides a charging control method. The control method is applied to the terminal device described in any one of the possible implementations of the first aspect, and includes:
A controller in the terminal device determines load power of the terminal device when the terminal device is connected to an external charging device, and controls a switch in the terminal device to be in an ON state when the load power is less than or equal to a first preset value.

In a possible implementation, the method further includes: The controller determines the load power of the terminal device when the terminal device is connected to the external charging device and the switch is in the ON state, and controls the switch to switch to an OFF state when the load power is greater than the first preset value.

In a possible implementation, the method further includes: The controller determines the load power of the terminal device and a power level of a battery when the terminal device is connected to the external charging device and the switch is in the OFF state, and controls the switch to remain in the OFF state when the load power is less than or equal to the first preset value and the power level is greater than or equal to a second preset value.

In a possible implementation, the method further includes: The controller controls the switch to be in the ON state when the terminal device is connected to the external charging device and when the controller determines that the terminal device is in a standby state or a power-off state.

In a possible implementation, the method further includes: The controller determines the load power of the terminal device and a power level of a battery when the terminal device is connected to the external charging device and the switch is in the ON state, and controls the switch to switch to an OFF state when the load power is greater than the first preset value and the power level is less than a second preset value.

In a possible implementation, the method further includes: The controller controls the switch to be in the OFF state when the terminal device is disconnected from external charging device.

In a possible implementation, the method further includes: The controller determines a voltage inputted by the external charging device when the terminal device is connected to external charging device. The controller controls a buck circuit in the terminal device to operate when the voltage is greater than or equal to a third preset value, or the controller controls a bypass circuit in the terminal device to operate when the voltage is less than the third preset value.

According to a third aspect, an embodiment of this application provides a terminal device, including a controller and a memory. The memory is configured to store code instructions, and the controller is configured run the code instructions to perform the method described in any one of the second aspect or the possible implementations of the second aspect.

According to a fourth aspect, an embodiment of this application provides a computer-readable storage medium. The computer-readable storage medium stores a computer program or instructions. When the computer program or the instructions are run on a computer, the computer is caused to perform the method described in any one of the second aspect or the possible implementations of the second aspect.

According to a fifth aspect, an embodiment of this application provides a computer program product including a computer program. When the computer program is run on a computer, the computer is caused to perform the method described in any one of the second aspect or the possible implementations of the second aspect.

According to a sixth aspect, this application provides a chip or a chip system. The chip or the chip system includes at least one processor and a communication interface. The communication interface and the at least one processor are interconnected through lines, and the at least one processor is configured to run a computer program or instructions to perform the method described in any one of the second aspect or the possible implementations of the second aspect. The communication interface in the chip may be an input/output interface, a pin, a circuit, or the like.

In a possible implementation, the chip or chip system described above in this application further includes at least one memory, and the at least one memory stores instructions. The memory may be a storage unit inside the chip, for example, a register or a cache, or may be a storage unit of the chip (for example, a read-only memory or a random access memory).

It should be understood that the technical solution of the second aspect of this application corresponds to the technical solution of the first aspect of this application, and the beneficial effects obtained in each aspect and the corresponding feasible implementations are similar. Details are not described herein again.

### BRIEF DESCRIPTION OF DRAWINGS

FIG. 1 is a schematic diagram of a circuit including a buck circuit and a HPB circuit according to an embodiment of this application;
FIG. 2 is a schematic diagram of a circuit of an HPB circuit according to an embodiment of this application;
FIG. 3 is a schematic diagram of a circuit including a narrow voltage direct current NVDC circuit according to an embodiment of this application;
FIG. 4 is a schematic diagram of a circuit of an NVDC circuit according to an embodiment of this application;
FIG. 5 is a schematic diagram of a structure of a terminal device according to an embodiment of this application;
FIG. 6 is a first schematic diagram of a charging circuit according to an embodiment of this application;
FIG. 7 is a second schematic diagram of a charging circuit according to an embodiment of this application; and
FIG. 8 is a schematic diagram of a structure of a chip according to an embodiment of this application.

### DESCRIPTION OF EMBODIMENTS

In embodiments of this application, terms such as "first" and "second" are used to distinguish between same items or similar items that have basically the same functions and purposes. For example, a first preset value and a second preset value are merely used to distinguish between different preset values, and are not intended to limit a sequence thereof. A person skilled in the art may understand that the terms such as "first", "second" do not limit a quantity and an execution order, and the terms such as "first", "second" are not limited to be necessarily different.

It should be noted that in embodiments of this application, the terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a relative concept in a specific manner.

In embodiments of this application, "at least one" means one or more, and "plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or similar expressions indicate any combination of these items, including any combination of a singular item (piece) or plural items (pieces). For example, at least one of a, b, or c may represent: a, b, c, a-b, a-c, b-c, or a-b-c, where a, b, and c may be singular or plural.

Electric power of a terminal device gradually decreases as the terminal device is used. When the electric power of the terminal device is low, an external charging device, such as a power adapter or a power bank, may be connected to charge the terminal device.

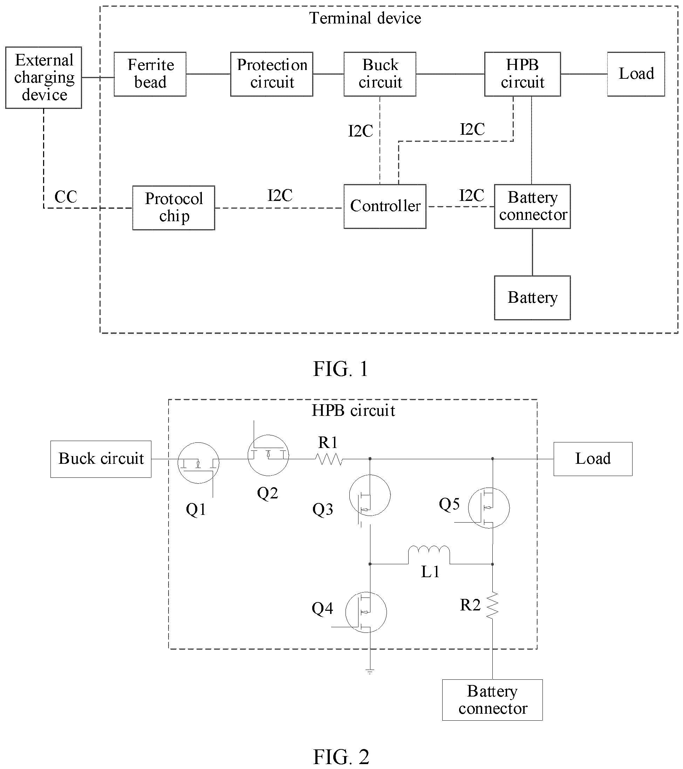

In some implementations, for a charging circuit of the terminal device, reference may be made to FIG. 1. FIG. 1 is a schematic diagram of a circuit including a buck circuit and a HPB circuit according to an embodiment of this application. As shown in FIG. 1, the terminal device may include a ferrite bead, a protection circuit, a buck circuit, an HPB circuit, a battery connector, a battery, a controller, a protocol chip, and a load. The controller may be an embedded controller (embedded controller, EC).

As shown in FIG. 1, a first end of the ferrite bead is connected to an external charging device, a second end of the ferrite bead is connected to a first end of the protection circuit, a second end of the protection circuit is connected to a first end of the buck circuit, a second end of the buck circuit is connected to a first end of the HPB circuit, a second end of the HPB circuit is connected to a first end of the battery connector, a third end of the HPB circuit is connected to the load, and a second end of the battery connector is connected to the battery. The first end of the buck circuit is an end of the buck circuit that receives electric power from the external charging device, and the first end of the HPB circuit is an end of the HPB circuit that receives the electric power from the external charging device.

The controller and the protocol chip, the buck circuit, the HPB circuit, and the battery connector may be connected via an inter-integrated circuit (inter-integrated circuit, I2C) serial bus. The protocol chip is connected to the external charging device via a CC pin. The external charging device may be a charger that supports a power delivery (powerdeliver, PD) charging protocol, or a charger that supports other charging protocols. This is not limited in embodiments of this application.

For an internal structure of the HPB circuit, reference may be made to FIG. 2. FIG. 2 is a schematic diagram of a circuit of an HPB circuit according to an embodiment of this application. As shown in FIG. 2, the HPB circuit may include a first switching transistor Q1, a second switching transistor Q2, a third switching transistor Q3, a fourth switching transistor Q4, a fifth switching transistor Q5, a first inductor L1, a first resistor R1, and a second resistor R2.

The ferrite bead is configured to eliminate electromagnetic interference in the charging circuit. The protection circuit may be an over voltage protection (over voltage protection, OVP) circuit and is configured to release an excessive voltage when the voltage in the circuit is excessively high, so as to achieve over voltage protection. The buck circuit is configured to step down the voltage inputted by the external charging device to a voltage required by the battery of the terminal device. The battery connector is configured to connect the battery to the HPB circuit. The controller is configured to control states of the buck circuit and the switching transistors in the HPB circuit, to charge the battery of the terminal device and supply power to the load of the terminal device by using the HPB circuit. The protocol chip may be configured to negotiate the voltage inputted by the external charging device. The load may be hardware or software in the terminal device that requires power during operation of a processor, a memory, a display screen, a camera, a wireless communication module, and the like.

With reference to the schematic diagrams of the circuits shown in FIG. 1 and FIG. 2, when the external charging device is connected to the terminal device, the protocol chip may determine, based on the CC pin, a charging protocol used in the external charging device, and negotiate, according to the charging protocol, with the external charging device about the voltage inputted to the terminal device. The controller may obtain, via the I2C, the input voltage agreed on by the protocol chip, and control, based on the agreed input voltage and a charging voltage allowed by the battery, a step-down ratio of the buck circuit via the I2C, so that the buck circuit steps down the voltage inputted by the external charging device to the voltage allowed by the battery. The controller may further control the first switching transistor Q1, the second switching transistor Q2, the third switching transistor Q3, and the fourth switching transistor Q4 in the HPB circuit to be in an ON state, and control the fifth switching transistor Q5 to be in a cut-off state. In this way, the terminal device may charge the battery of the terminal device through the ferrite bead, the protection circuit, the buck circuit, the first switching transistor Q1, the second switching transistor Q2, the third switching transistor Q3, the fourth switching transistor Q4, the first inductor L1, the first resistor R1, and the battery connector. In addition, when the battery is charged, the terminal device may further supply power to the load of the terminal device through the first switching transistor Q1, the second switching transistor Q2, and the first resistor R1 in the HPB circuit.

It may be understood that when the terminal device is disconnected from the external charging device, the terminal device may use the battery to supply power to the load of the terminal device through the battery connector, and the second resistor R2 and the fifth switching transistor Q5 in the HPB circuit.

However, conversion efficiency of the buck circuit is low. In this case, when the buck circuit steps down the voltage inputted by the external charging device, part of electrical energy may be converted into heat energy for dissipation. In addition, when the terminal device charges the battery through the first switching transistor Q1, the second switching transistor Q2, the third switching transistor Q3, the fourth switching transistor Q4, the first inductor L1, and the first resistor R1 in the HPB circuit, part of the electrical energy may also be converted into heat energy for dissipation. In this case, when the terminal device charge the battery by using the circuit shown in FIG. 1, a large amount of electric energy is lost, resulting in low charging efficiency.

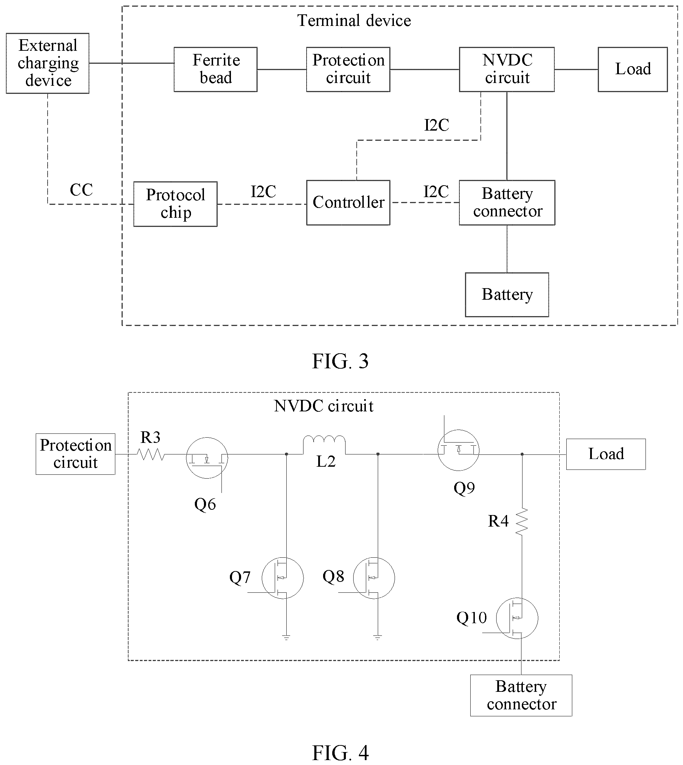

In other implementations, the terminal device may charge the battery by using a narrow voltage direct current (narrow voltage direct current, NVDC) circuit. FIG. 3 is a schematic diagram of a circuit including an NVDC circuit according to an embodiment of this application. As shown in FIG. 3, the circuit used in the terminal device may include a ferrite bead, a protection circuit, the NVDC circuit, a battery connector, a battery, a controller, a protocol chip, and a load.

As shown in FIG. 3, a first end of the ferrite bead is connected to an external charging device, a second end of the ferrite bead is connected to a first end of the protection circuit, a second end of the protection circuit is connected to a first end of the NVDC circuit, a second end of the NVDC circuit is connected to a first end of the battery connector, a third end of the NVDC circuit is connected to the load, and a second end of the battery connector is connected to the battery. The first end of the NVDC circuit is an end of the NVDC circuit that receives electric power from the external charging device.

For the ferrite bead, the protection circuit, the battery connector, the controller, the protocol chip, and the load, reference may be made to the foregoing embodiments, and details are not described herein again. The NVDC circuit is configured to charge the battery of the terminal device and supply power to the load of the terminal device.

For an internal structure of the NVDC circuit, reference may be made to FIG. 4. FIG. 4 is a schematic diagram of a circuit of an NVDC circuit according to an embodiment of this application. As shown in FIG. 4, the NVDC circuit may include a sixth switching transistor Q6, a seventh switching transistor Q7, an eighth switching transistor Q8, a ninth switching transistor Q9, a tenth switching transistor Q10, a second inductor L2, a third resistor R3, and a fourth resistor R4. It may be understood that the NVDC circuit and the HPB circuit may include same elements, but connection relationships between the elements are different.

With reference to the schematic diagrams of the circuits shown in FIG. 3 and FIG. 4, when the external charging device is connected to the terminal device, the controller may use an I2C to control the sixth switching transistor Q6, the seventh switching transistor Q7, the eighth switching transistor Q8, the ninth switching transistor Q9, and the tenth switching transistor Q10 in the NVDC circuit to be in an ON state. In this way, the terminal device may charge the battery of the terminal device through the ferrite bead, the protection circuit, the sixth switching transistor Q6, the seventh switching transistor Q7, the eighth switching transistor Q8, the ninth switching transistor Q9, the tenth switching transistor Q10, the second inductor L2, the third resistor R3, the fourth resistor R4, and the battery connector. In addition, when the battery is charged, the terminal device may further supply power to the load of the terminal device through the third resistor R3, the sixth switching transistor Q6, the second inductor L2, and the ninth switching transistor Q9 in the NVDC circuit.

It may be understood that when the terminal device is disconnected from the external charging device, the terminal device may use the battery to supply power to the load of the terminal device through the battery connector, and the fourth resistor R4 and the tenth switching transistor Q10 in the NVDC circuit.

However, when a voltage inputted by the external charging device passes through the sixth switching transistor Q6, the seventh switching transistor Q7, the eighth switching transistor Q8, the ninth switching transistor Q9, the tenth switching transistor Q10, the second inductor L2, the third resistor R3, and the fourth resistor R4 in the NVDC circuit, part of electrical energy may be converted into heat energy for dissipation, resulting in a large amount of electrical energy loss during charging and low charging efficiency of the terminal device.

In view of this, an embodiment of this application provides a terminal device. The terminal device may include a switch. One end of the switch is connected to an end of an HPB circuit that receives electric power from an external charging device, and the other end of the switch is connected to an end of the HPB circuit that is connected to a battery. A controller may control a state of the switch. In this way, when the battery of the terminal device is charged, and when the controller controls the switch to be in an ON state, the electric power of the external charging device can be supplied to the battery by using the switch without needing to use the HPB circuit, so that a loss of electric energy is reduced, thereby improving charging efficiency of the terminal device.

For example, the terminal device in this embodiment of this application may alternatively be a terminal device in any form. For example, the terminal device may include a handheld device having an image processing function, a vehicle-mounted device, and the like. For example, some terminal devices are as follows: a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN). This is not limited in embodiments of this application.

By way of example and not limitation, in this embodiment of this application, the terminal device may alternatively be a wearable device. The wearable device may also be referred to as a wearable smart device, and is a collective term for wearable devices that are developed by intelligently designing for daily wear by using a wearable technology, for example, glasses, gloves, a watch, clothing, and shoes. The wearable device is a portable device that can be directly worn on a body or integrated into clothes or an accessory of a user. The wearable device is not merely a hardware device, but implements a powerful function through software support, data exchange, and cloud interaction. In a broad sense, the wearable intelligent device includes a full-featured and large-sized device that can implement all or some of functions without depending on a smartphone, for example, a smart watch or smart glasses, and a device that is dedicated to only one type of application and needs to collaboratively work with another device such as a smartphone, for example, various smart bands or smart jewelry for monitoring physical signs.

In addition, in this embodiment of this application, the terminal device may alternatively be a terminal device in an internet of things (internet of things, IoT) system. An IoT is an important part in future development of information technologies. A main technical feature of the IoT is connecting an object to a network by using a communication technology, to implement an intelligent network of human-machine interconnection and thing-thing interconnection.

The terminal device in this embodiment of this application may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

In this embodiment of this application, the terminal device or each network device includes a hardware layer, an operating system layer running over the hardware layer, and an application layer running over the operating system layer. The hardware layer includes hardware such as a central processing unit (central processing unit, CPU), a memory management unit (memory management unit, MMU), and a memory (which is also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as Browser, Contacts, text processing software, and instant messaging software.

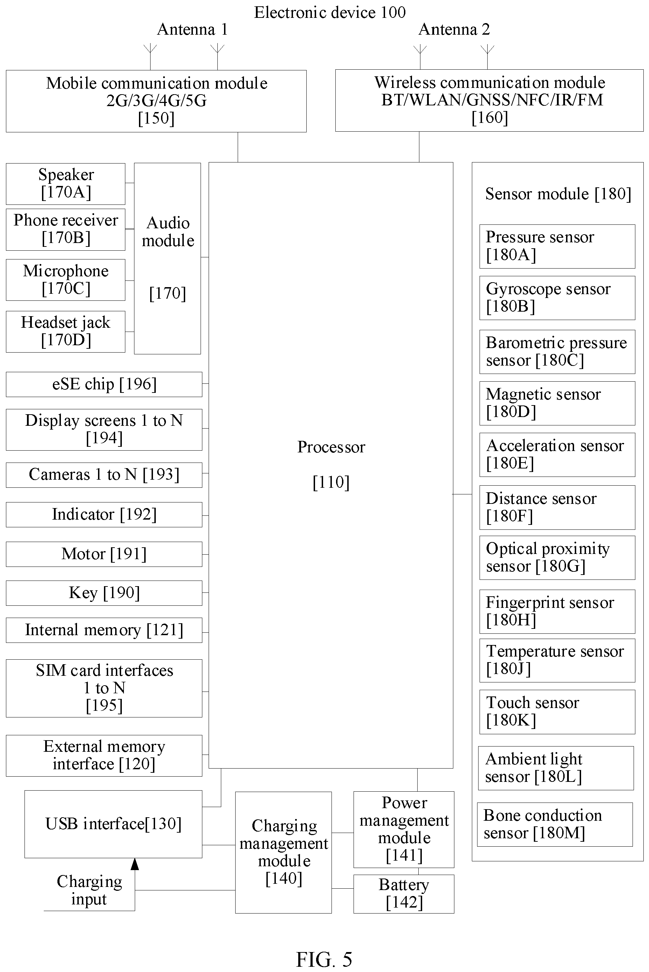

For example, FIG. 5 is a schematic diagram of a structure of a terminal device.

The terminal device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device. In some other embodiments of this application, an electronic device may include more or fewer components than those shown in the figure, some components may be combined, some components may be split, or a different component deployment may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate components, or may be integrated into one or more processors.

In some embodiments, the controller and a protocol chip in this application may both be disposed in the processor 110, and the protocol chip may be integrated into the controller or may be separately disposed in the processor 110. The controller may be configured to determine load power, a power level of a battery, and the like of the terminal device. When the terminal device is connected to the external charging device to charge the battery, the controller may control the state of the switch in the circuit based on the load power and the power level of the battery. When the terminal device is connected to the external charging device to charge the battery, the protocol chip may be configured to negotiate a voltage inputted by the external charging device.

In some embodiments, the controller in this application may be disposed in the power management module 141, and a specific position of the controller is not limited in this embodiment of this application. For functions and components included in the power management module 141, refer to the following descriptions.

A memory configured to store instructions and data may be further disposed in the processor 110. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access, and reduces a waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of I2C buses. The processor 110 may be separately coupled to the touch sensor 180K, a charger, a flash, the camera 193, and the like via different I2C bus interfaces.

In some embodiments, the controller may include a plurality of I2C buses. The controller may be coupled to a buck circuit, a bypass circuit of the buck circuit, and a switch in the charging management module 140 via the I2C interface to control the buck circuit or the bypass circuit to operate and control the state of the switch.

The USB interface 130 is an interface that complies with a USB standard specification, and may be specifically a Mini USB interface, a Micro USB interface, a USB Type C interface, or the like. The USB interface 130 may be configured to be connected to the charger to charge the electronic device 100, or may be used for data transmission between the electronic device 100 and a peripheral device. The USB interface 130 may alternatively be configured to be connected to a headset to play audio using the headset. The interface may alternatively be configured to be connected to another electronic device such as an AR device.

It may be understood that an interface connection relationship between the modules illustrated in this embodiment of the present invention is merely an example for description, and does not constitute a limitation on a structure of the electronic device. In some other embodiments of this application, the electronic device may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive charging input from the wired charger via the USB interface 130. In some embodiments of wireless charging, the charging management module 140 may receive wireless charging inputted by using a wireless charging coil of the electronic device 100. In some embodiments of wired charging, the terminal device may be connected to the external charging device via the USB interface 130. When charging the battery 142, the charging management module 140 may further supply power to a load of the terminal device by using the power management module 141. In some embodiments, the charging management module 140 may include a ferrite bead, an over voltage protection circuit, a buck circuit, a bypass circuit of the buck circuit, a switch, and the like. When the terminal device is connected to the external charging device, the battery of the terminal device may be charged by using the foregoing components.

The power management module 141 is configured to be connected to the battery 142, the charging management module 140, and the processor 110. The power management module 141 receives input from the battery 142 and/or the charging management module 140, and supplies power to the processor 110, the internal memory 121, the display screen 194, the camera 193, the wireless communication module 160, and the like. In some other embodiments, the power management module 141 may alternatively be disposed in the processor 110. In some other embodiments, the power management module 141 and the charging management module 140 may alternatively be disposed in a same device.

In some embodiments, both the power management module 141 and the charging management module 140 may be connected to the battery 142 via a battery connector. An HPB circuit may be disposed in the power management module 141 or in the charging management module 140. This is not limited in this embodiment of this application.

The power management module 141 may be further configured to monitor parameters such as a power level of the battery, a battery capacity, a quantity of battery cycles, a battery health state (electric leakage and impedance), a supply voltage, a supply current, and supply power. In some embodiments, when the controller is not disposed in the power management module 141, the power management module 141 may send monitored parameters such as the power level of the battery, the supply voltage, the supply current, and the supply power to the controller, so that the controller can determine load power of the terminal device based on the supply power, and control the state of the switch based on the load power and the power level of the battery.

The electronic device implements a display function through the GPU, the display screen 194, the application processor, and the like. The GPU is a microprocessor for image processing and connects the display screen 194 and the application processor. The GPU is configured to perform mathematical and geometric calculations for graphics rendering. The processor 110 may include one or more GPUs that execute program instructions to generate or change display information.

The external memory interface 120 may be configured to be connected to an external storage card such as a Micro SD card, to expand a storage capability of the electronic device. The external storage card communicates with the processor 110 via the external memory interface 120, to implement a data storage function, for example, store files such as music and a video into the external storage card.

The internal storage 121 may be configured to store computer-executable program code, and the executable program code includes instructions. The internal memory 121 may include a program storage area and a data storage area. The program storage area may store an operating system, an application required by at least one function (such as a voice playing function and an image playing function), and the like. The data storage region may store data (for example, audio data and a phone book) and the like created when the electronic device is used. In addition, the internal memory 121 may include a high-speed random access memory, and may further include a non-volatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to implement various functional applications and data processing of the electronic device.

A software system of the electronic device 100 may use a layered architecture, an event-driven architecture, a micro core architecture, a micro service architecture, or a cloud architecture. The software system of the electronic device is not limited in this embodiment of this application.

The following describes the technical solutions of this application and how to resolve the foregoing technical problems according to the technical solutions of this application in detail by using specific embodiments. The following several specific embodiments may be independently implemented, and may alternatively be combined with each other, and the same or similar concepts or processes may not be described repeatedly in some embodiments.

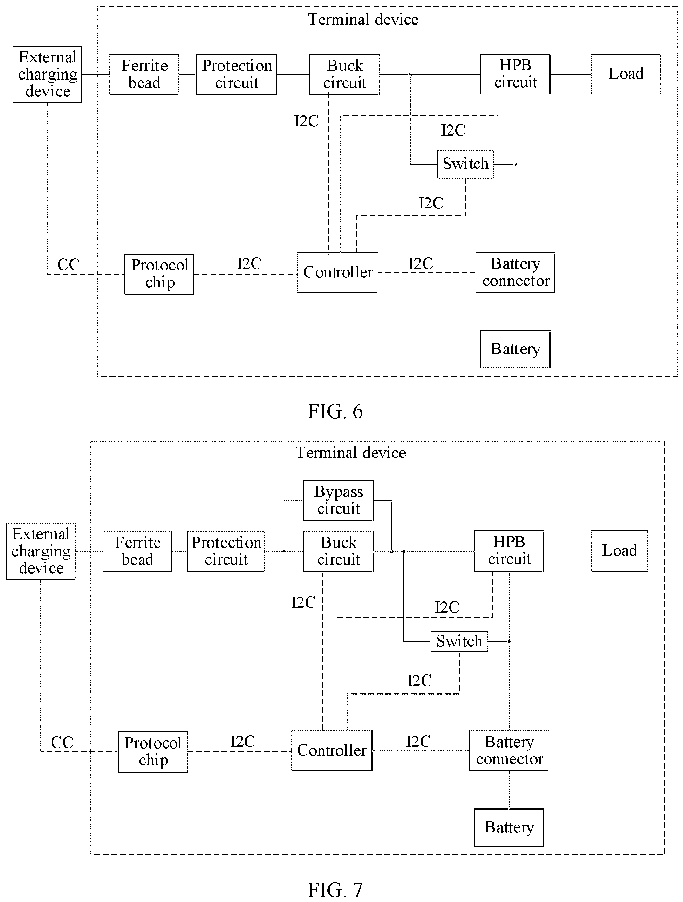

FIG. 6 is a first schematic diagram of a charging circuit according to an embodiment of this application. As shown in FIG. 6, the terminal device may include a ferrite bead, a protection circuit, a buck circuit, an HPB circuit, a switch, a battery connector, a battery, a controller, a protocol chip, and a load. The switch may be a switching transistor, for example, a MOS transistor or a bipolar transistor.

As shown in FIG. 6, a first end of the ferrite bead is connected to an external charging device, a second end of the ferrite bead is connected to a first end of the protection circuit, a second end of the protection circuit is connected to a first end of the buck circuit, a second end of the buck circuit is connected to a first end of the HPB circuit that receives electric power from the external charging device and a first end of the switch, a second end of the HPB circuit is connected to a first end of the battery connector, a third end of the HPB circuit is connected to the load of the terminal device, a second end of the switch is connected to the second end of the HPB circuit and the first end of the battery connector, and a second end of the battery connector is connected to the battery. The first end of the buck circuit is an end of the buck circuit that receives the electric power from the external charging device, and the first end of the HPB circuit is an end of the HPB circuit that receives the electric power from the external charging device.

In addition to being connected to the protocol chip, the HPB circuit, and the battery connector via an I2C serial bus, the controller is further connected to the switch via an I2C serial bus.

For the ferrite bead, the protection circuit, the HPB circuit, the battery connector, the protocol chip, and the load, refer to the foregoing embodiment. Details are not described herein again.

In this embodiment of this application, when the terminal device charges the battery by using the circuit shown in FIG. 6, the controller may control states of switching transistors in the HPB circuit and may further control a state of the switch via the I2C.

For example, with reference to the circuit shown in FIG. 6, when the terminal device is connected to the external charging device, there are the following two possible implementations.

In a possible implementation, when the terminal device is connected to the external charging device, the protocol chip may obtain a charging protocol used by the external charging device, and negotiate, according to the charging protocol, with the external charging device about a voltage inputted to the terminal device. The controller may obtain, via the I2C, the input voltage agreed on by the protocol chip, and control, based on the agreed input voltage and a charging voltage allowed by the battery, a step-down ratio of the buck circuit via the I2C, so that the buck circuit steps down the voltage inputted by the external charging device to the voltage allowed by the battery. The controller may also determine load power of the terminal device via a communication connection (for example, a 12C connection not shown in FIG. 6) between the controller and the load. Alternatively, the controller may obtain an output voltage and an output current of the battery via the I2C between the controller and the battery connector, and determine load power of the terminal device based on the output voltage and the output current of the battery. The switch may be controlled to be in an ON state when the load power is less than or equal to a first preset value. In this way, the electric power from the external charging device is inputted into the battery of the terminal device through the ferrite bead, the protection circuit, the buck circuit, the switch, and the battery connector, without needing to pass through the components in the HPB circuit, such as switching transistors and resistors. Electric energy lost in charging the battery by using the switch is much less than electric energy lost by using the HPB circuit, so that a loss of the electric energy is reduced, thereby improving charging efficiency of the terminal device.

It may be understood that when the switch is in the ON state, a current in the circuit shown in FIG. 6 flows from the external charging device into the terminal device, passes through the ferrite bead, the protection circuit, the buck circuit, the switch, and the battery connector in sequence, and flows into the battery to charge the battery (where a current direction is not shown in FIG. 6). The current may alternatively flow from the external charging device, pass through the ferrite bead, the protection circuit, the buck circuit, and the HPB circuit in sequence, and flow into the load to supply power to the load.

For example, when the terminal device is connected to the external charging device and when the load power is less than or equal to the first preset value, the controller may further control a first switching transistor Q1 and a second switching transistor Q2 in the HPB circuit to be in an ON state, and control a third switching transistor Q3, a fourth switching transistor Q4, and a fifth switching transistor Q5 to be in a cut-off state, so that the terminal device may charge the battery by using the switch while also supplying power to the load of the terminal device through the first switching transistor Q1, the second switching transistor Q2, and a first resistor R1 in the HPB circuit.

For example, the first preset value may be corresponding load power when the terminal device runs some applications consuming low power, for example, the terminal device runs an application such as a chat application or a music player. In some embodiments, the first preset value may be a value less than input power of the external charging device, so that the external charging device may charge the battery and supply power to the load at the same time, and therefore a sum of charging power of the battery and supply power of the load is equal to the input power of the external charging device. The first preset value is not limited in embodiments of this application.

In another possible implementation, when the terminal device is in a standby state or a power-off state, the controller may receive an electrical signal. The electrical signal is for indicating that the terminal device is in the standby state or the power-off state. When the terminal device is in the standby state or the power-off state, the load power of the terminal device is low. In this case, when the terminal device is in the standby state or the power-off state and is connected to the external charging device, the controller may determine, based on the received electrical signal, that the terminal device is in the standby state or the power-off state and control the switch to be in the ON state. In this way, the electric power from the external charging device is inputted into the battery of the terminal device through the ferrite bead, the protection circuit, the buck circuit, the switch, and the battery connector, without needing to pass through the HPB circuit.

It may be understood that when the terminal device is in the standby state or the power-off state and is connected to the external charging device, the controller may also control the buck ratio of the buck circuit via the I2C. For details, refer to the foregoing embodiment. Details are not described herein again.

When the switch is in the ON state, for a current flow direction, reference may be made to the foregoing embodiment. Details are not described herein again.

For example, when the terminal device is in the standby state or the power-off state and is connected to the external charging device, the controller may also control the first switching transistor Q1 and the second switching transistor Q2 in the HPB circuit to be in the ON state, and control the third switching transistor Q3, the fourth switching transistor Q4, and the fifth switching transistor Q5 to be in a cut-off state, so that the terminal device may charge the battery by using the switch while also supplying power to the load of the terminal device through the first switching transistor Q1, the second switching transistor Q2, and a first resistor R1 in the HPB circuit.

In this way, when the terminal device is in the standby state or the power-off state, the terminal device may charge the battery by using the switch without needing to use the HPB circuit, so that charging efficiency of the terminal device is improved. Moreover, there is no need for the controller to determine, based on the load power of the terminal device, whether to control the switch to be in the ON state, so that the state of the switch can be quickly controlled.

The above example describes a function of the controller when the terminal device is connected to the external charging device. The following describes a function of the controller during charging.

For example, in a process in which the terminal device is connected to the external charging device to charge the battery, there are a plurality of following possible implementations.

In a possible implementation, the controller may determine the load power of the terminal device in real time when the terminal device is connected to the external charging device and the switch is in the ON state, and control the switch to switch to an OFF state when the load power is greater than the first preset value.

For example, the controller may determine the load power of the terminal device in real time via a communication connection (for example, a 12C connection not shown in FIG. 6) between the controller and the load.

For example, a case in which the load power becomes greater than the first preset value may be as follows: The terminal device switches from running an application consuming low power to running an application consuming high power. For example, the terminal device switches from running a music player application to running a large-scale real-world game application. Alternatively, the terminal device runs a plurality of applications simultaneously. Alternatively, the terminal device switches from being in the standby state to running an application consuming high power. Alternatively, the terminal device switches from being in the power-off state to running an application consuming high power. Embodiments of this application are merely described by using the foregoing cases as examples and do not constitute a limitation on this application.

When the switch is in the OFF state, for the states of the switching transistors in the HPB circuit, reference may be made to the foregoing relevant descriptions in FIG. 1. Details are not described herein again.

For example, the controller may also compare the load power of the terminal device and charging power of the external charging device, to determine, based on a comparison result, whether the battery needs to supply power to the load. When the controller determines that the charging power is higher than the load power, the terminal device may use the external charging device to supply power to the load of the terminal device through the first switching transistor Q1, the second switching transistor Q2, and the first resistor R1 in the HPB circuit. In addition, the terminal device may further use the external charging device to charge the battery of the terminal device through the third switching transistor Q3, the fourth switching transistor Q4, a first inductor L1, and a second resistor R2 in the HPB circuit.

It may be understood that when the switch is in the OFF state and the controller determines that the charging power is higher than the load power, a current flows from the external charging device into the terminal device, passes through the ferrite bead, the protection circuit, the buck circuit, the HPB circuit, and the battery connector in sequence, and flows into the battery to charge the battery (where a current direction is not shown in FIG. 6). The current may alternatively flow from the external charging device, pass through the ferrite bead, the protection circuit, the buck circuit, and the HPB circuit in sequence, and flow into the load to supply power to the load.

When the controller determines that the charging power is lower than the load power, the terminal device may use the external charging device to supply power to the load of the terminal device through the first switching transistor Q1, the second switching transistor Q2, and the first resistor R1 in the HPB circuit. In addition, the terminal device may also use the battery to supply power to the load of the terminal device through the third switching transistor Q3, the fourth switching transistor Q4, the first inductor L1, and the second resistor R2 in the HPB circuit, so that the terminal device can operate stably.

It may be understood that when the switch is in the OFF state and the controller determines that the charging power is lower than the load power, a current flows from the external charging device into the terminal device, passes through the ferrite bead, the protection circuit, the buck circuit, and the HPB circuit in sequence, and flows into the load to supply power to the load (where a current direction is not shown in FIG. 6). The current may alternatively flow from the battery, pass through the battery connector and the HPB circuit in sequence, and flow into the load to supply power to the load.

In this way, when the load power is greater than the first preset value, the switch is controlled to be switched to the OFF state, so that the terminal device can supply most of the electric power inputted by the external charging device to the load, and the terminal device can operate stably, thereby improving user experience.

In another possible implementation, the controller may determine the load power of the terminal device and a power level of the battery in real time when the terminal device is connected to the external charging device and the switch is in the OFF state, and control the switch to remain in the OFF state when the load power is less than or equal to the first preset value and the power level is greater than or equal to a second preset value.

It may be understood that when the switch is in the OFF state, for a current flow direction, reference may be made to the foregoing embodiment, and details are not described herein again.

For example, the second preset value may be a corresponding value when the power level of the battery is high. For example, the second preset value may be a corresponding value when the power level of the battery is 90%. The switch being in the OFF state indicates that the load power is large. A case in which the load power becomes less than or equal to the first preset value may be contrary to the case in which the load power becomes greater than the first preset value, and details are not described herein again.

For example, when the terminal device switches from running a plurality of applications simultaneously to being in the standby state and the power level of the battery is higher than or equal to 90%, the controller may control the switch to remain in the OFF state.

It may be understood that as the power level of the battery increases, the charging power of the terminal device decreases. When the power level of the battery is high, the power for charging the battery by using the HPB circuit is low, and less electric energy is lost. In this case, when the load power is less than or equal to the first preset value and the power level of the battery is greater than or equal to the second preset value, the battery may be charged by using the HPB circuit, and the controller may control the switch to remain in the OFF state.

In this way, when the load power is low but the power level of the battery is high, adjustment is performed based on the power level of the battery first, so that switch control is enriched.

In another possible implementation, the controller may determine the load power of the terminal device and a power level of the battery in real time when the terminal device is connected to the external charging device and the switch is in the ON state, and control the switch to switch to an OFF state when the load power is greater than the first preset value and the power level is less than a second preset value.

It may be understood that when the switch is in the OFF state, for a current flow direction, reference may be made to the foregoing embodiment, and details are not described herein again.

For example, for a case in which the load power becomes greater than the first preset value, reference may be made to the foregoing embodiment, and details are not described herein again.

In this possible implementation, the terminal device may use the external charging device to supply power to the load by using the HPB circuit, and may further charge the battery by using the HPB circuit. Alternatively, the external charging device is used to supply power to the load by using the HPB circuit while the battery is used to supply power to the load. For specific methods of charging and power supply, refer to the relevant descriptions when the load power is greater than the first preset value. Details are not described herein again.

In this way, by controlling the switch to be switched to the OFF state, the terminal device may supply power to the load preferentially, so that the terminal device can operate stably, thereby improving user experience.

In this embodiment of this application, when the terminal device is disconnected from the external charging device, the controller may control the switch to be in the OFF state.

In this way, when the terminal device is connected to the external charging device, there is no need to first determine the state of the switch via the I2C between the switch and the controller and then control the switch based on the switch state. It can be quickly determined that the switch is in the OFF state, so as to facilitate control of the controller on the switch.

For example, when the terminal device charge the battery by using the external charging device, different external charging devices may have different power, leading to different voltages inputted by the external charging device. By using a high-power external charging device to charge the battery, a charging speed of the terminal device can be increased. When the power of the external charging device is high, the voltage inputted to the terminal device is high, and the buck circuit needs to step down the inputted voltage. When the voltage inputted by the external charging device is low, if the buck circuit is used to step down the inputted voltage, a loss of electric energy may be caused.

In this embodiment of this application, the terminal device may further include a bypass circuit of the buck circuit. The bypass circuit is connected in parallel to the buck circuit. For details, refer to FIG. 7. FIG. 7 is a second schematic diagram of a charging circuit according to an embodiment of this application.

As shown in FIG. 7, one end of the buck circuit is connected to the protection circuit and receives the electric power from the external charging device, the other end of the buck circuit is connected to the end of the HPB circuit that receives the electric power from the external charging device, and the buck circuit is connected in parallel to the bypass circuit. For connection methods of other components in the circuit, refer to the foregoing embodiment. Details are not described herein again.

The bypass circuit may include a switching transistor, such as a MOS transistor. This is not limited in embodiments of this application.

For example, when the terminal device is connected to the external charging device, the protocol chip may obtain a charging protocol used by the external charging device, and negotiate, according to the charging protocol, with the external charging device about a voltage inputted to the terminal device. The controller may obtain, via the I2C, the input voltage agreed on by the protocol chip, and control, the buck circuit or the bypass circuit to operate via the I2C based on the agreed input voltage and a charging voltage allowed by the battery.

A case in which the controller controls the buck circuit or the bypass circuit to operate based on the voltage inputted by the external charging device may include: When the voltage that is agreed on by the external charging device and that is inputted to the terminal device is greater than or equal to a third preset value, the controller may control the buck circuit to operate. When the voltage that is agreed on by the external charging device and that is inputted to the terminal device is less than the third preset value, the controller may control the bypass circuit to operate. The third preset value may be a voltage value allowed by the battery of the terminal device. This is not limited in embodiments of this application.

It may be understood that the method for controlling the switch by the controller in FIG. 7 is similar to that shown in FIG. 6 above, and details are not described herein again. When the bypass circuit operates and the buck circuit does not operate, in the current flow direction described in the foregoing embodiment, the buck circuit is replaced with the bypass circuit, and a specific flow direction is not described herein again.

In this way, the terminal device may determine, based on a magnitude of the voltage inputted by the external charging device, whether to step down the voltage. When the inputted voltage is high, the buck circuit is controlled to step down the inputted voltage. When the inputted voltage is low, the bypass circuit is controlled to operate, and the buck circuit does not need to step down the inputted voltage. When the controller controls the bypass circuit to operate, less electric energy is lost, so that charging efficiency of the terminal device is further improved.

For example, the buck circuit shown in FIG. 7 may be a charging chip, such as an SC circuit. Due to high conversion efficiency of the charging chip, less electric energy is lost when the voltage inputted by the external charging device is stepped down, so that charging efficiency of the terminal device is further improved.

In conclusion, the efficiency charging the battery and supplying power to the load by using the circuit shown in FIG. 7 is greater than that by using the circuit shown in FIG. 1. For example, when the terminal device is charged by using an external charging device with power of 140 W in a PD3.1 protocol, and when the circuit shown in FIG. 1 is used to charge the battery and supply power to the load, charging efficiency is about 90% and power supply efficiency is about 95%. When the circuit shown in FIG. 7 is used to charge the battery of the terminal device and supply power to the load, charging efficiency is between 90% and 93%, power supply efficiency is between 95% and 98%, a heat consumption benefit is about 4.2 W, and the battery of the terminal device can be charged to 75% (60 WH) or more in 30 minutes.

To implement the functions described in the foregoing embodiment, the terminal device includes corresponding hardware structures and/or software modules for performing the functions. A person skilled in the art should be easily aware that the charging control method in the examples described with reference to embodiments disclosed in this specification can be implemented in this application in the form of hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, an apparatus for implementing the charging control method may be divided into functional modules based on the foregoing examples, for example, each functional module may be obtained through division for each corresponding function, or two or more functions may be integrated into one processing module. The integrated module may be implemented in the form of hardware, or may be implemented in the form of a software functional module. It should be noted that in embodiments of this application, the module division is an example, and is merely logical function division, and there may be other division manners during actual implementation.

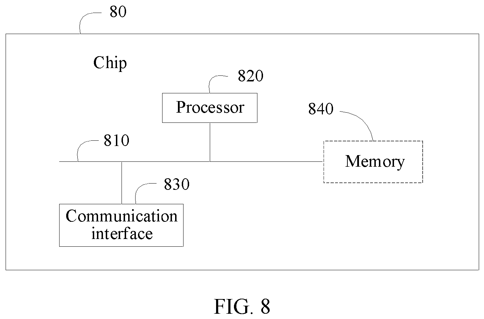

FIG. 8 is a schematic diagram of a structure of a chip according to an embodiment of this application. The chip 800 includes one or at least two (including two) processors 801, a communication line 802, a communication interface 803, and a memory 804. The processor 801 may include the controller described in the foregoing embodiment, or may implement functions of the controller described in the foregoing embodiment.

In some implementations, the memory 804 stores the following elements: an executable module or a data structure, a subset thereof, or an extended set thereof.

The control method described in the foregoing embodiment of this application may be applied to the processor 801 or implemented by the processor 801. The processor 801 may be an integrated circuit chip having a signal processing capability. In an implementation process, steps in the foregoing method may be implemented by using a hardware integrated logical circuit in the processor 801, or by using instructions in a form of software. The foregoing processor 801 may be a general-purpose processor (for example, a microprocessor or a conventional processor), a digital signal processor (digital signal processing, DSP), an application specific integrated circuit (application specific integrated circuit, ASIC), a field-programmable gate array (field-programmable gate array, FPGA) or another programmable logic device, a discrete gate, a transistor logic device, or a discrete hardware component. The processor 801 may implement or perform various processing-related methods, steps, and logical block diagrams disclosed in embodiments of this application.

The steps of the control method disclosed with reference to embodiments of this application may be directly performed and completed by using a hardware decoding processor, or may be performed and completed by using a combination of hardware and software modules in the decoding processor. The software module may be located in a mature storage medium in the art, such as a random access memory, a read-only memory, a programmable read-only memory, or an electrically erasable programmable memory (electrically erasable programmable read only memory, EEPROM). The storage medium is located in the memory 804, and the processor 801 reads information in the memory 804 and completes the steps of the foregoing method in combination with hardware thereof.

The processor 801, the memory 804, and the communication interface 803 may communicate with each other via the communication line 802.

In the foregoing embodiment, the instructions executed by the processor and stored in the memory may be implemented in the form of a computer program product. The computer program product may be pre-written in the memory, or may be downloaded and installed in the memory in the form of software.

An embodiment of this application further provides a computer program product including one or more computer instructions. When the computer program instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may include a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like.

An embodiment of this application further provides a computer-readable storage medium. All or part of the control method described in the foregoing embodiment may be implemented by software, hardware, firmware, or any combination thereof. The computer-readable medium may include a computer storage medium and a communication medium, and may further include any medium that can transfer a computer program from one place to another. The storage medium may be any target medium accessible by a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared, radio, and microwave are included in the definition of the medium. A magnetic disk and an optical disc used herein include a compact disc (CD), a laser disc, an optical disc, a digital versatile disc (digital versatile disc, DVD), a floppy disk, and a blue ray disc. The magnetic disk generally reproduces data in a magnetic manner, and the optical disc reproduces data optically by using laser.

Embodiments of this application are described with reference to flowcharts and/or block diagrams of the method, the device (system), and the computer program product according to embodiments of this application. It should be understood that computer program instructions can implement each procedure and/or block in the flowcharts and/or the block diagrams and a combination of procedures and/or blocks in the flowcharts and/or the block diagrams. These computer program instructions may be provided for a general-purpose computer, a dedicated computer, an embedded processor, or a processing unit of another programmable data processing device to generate a machine, so that the instructions executed by the computer or the processing unit of the another programmable data processing device generate an apparatus for implementing a specific function in one or more procedures in the flowcharts and/or in one or more blocks in the block diagrams.

## Claims

1. A terminal device, wherein the terminal device comprises: a controller, a hybrid power boost HPB circuit, a switch, and a battery;
one end of the switch is connected to an end of the HPB circuit that receives electric power from an external charging device, the other end of the switch is connected to an end of the HPB circuit that is connected to the battery, and the HPB circuit is configured to charge the battery and supply power to a load of the terminal device; and
the controller is configured to: determine load power of the terminal device when the terminal device is connected to the external charging device, and control the switch to be in an ON state when the load power is less than or equal to a first preset value.

2. The terminal device according to claim 1, wherein the controller is further configured to:
determine the load power of the terminal device when the terminal device is connected to the external charging device and the switch is in the ON state, and control the switch to switch to an OFF state when the load power is greater than the first preset value.

3. The terminal device according to claim 2, wherein the controller is further configured to:
determine the load power of the terminal device and a power level of the battery when the terminal device is connected to the external charging device and the switch is in the OFF state, and control the switch to remain in the OFF state when the load power is less than or equal to the first preset value and the power level is greater than or equal to a second preset value.

4. The terminal device according to claim 1, wherein the controller is further configured to control the switch to be in the ON state when the terminal device is connected to the external charging device and when it is determined that the terminal device is in a standby state or a power-off state.

5. The terminal device according to claim 4, wherein the controller is further configured to:
determine the load power of the terminal device and a power level of the battery when the terminal device is connected to the external charging device and the switch is in the ON state, and control the switch to switch to an OFF state when the load power is greater than the first preset value and the power level is less than a second preset value.

6. The terminal device according to any one of claims 1 to 5, wherein the controller is further configured to control the switch to be in the OFF state when the terminal device is disconnected from the external charging device.

7. The terminal device according to any one of claims 1 to 6, wherein the terminal device further comprises a buck circuit and a bypass circuit of the buck circuit;
one end of the buck circuit receives the electric power from the external charging device, the other end of the buck circuit is connected to the end of the HPB circuit that receives the electric power from the external charging device, and the buck circuit is connected in parallel to the bypass circuit;
the buck circuit is configured to step down a voltage inputted by the external charging device; and
the controller is further configured to: determine the voltage inputted by the external charging device when the terminal device is connected to the external charging device, and control the buck circuit or the bypass circuit to operate based on the voltage.

8. The terminal device according to claim 7, wherein the controller is specifically configured to: control the buck circuit to operate when the voltage is greater than or equal to a third preset value, or control the bypass circuit to operate when the voltage is less than the third preset value.

9. The terminal device according to claim 7 or 8, wherein the buck circuit comprises a charging chip.

10. The terminal device according to any one of claims 1 to 9, wherein the terminal device further comprises a ferrite bead, an over voltage protection circuit, a battery connector, and a protocol chip;
a first end of the ferrite bead is connected to the external charging device, a second end of the ferrite bead is connected to a first end of the protection circuit, a second end of the protection circuit is connected to a first end of the buck circuit and a first end of the bypass circuit, a second end of the buck circuit and a second end of the bypass circuit are connected to a first end of the HPB circuit that receives the electric power from the external charging device and a first end of the switch, a second end of the HPB circuit is connected to a first end of the battery connector, a third end of the HPB circuit is connected to the load of the terminal device, a second end of the switch is connected to the second end of the HPB circuit and the first end of the battery connector, and a second end of the battery connector is connected to the battery;
the first end of the HPB circuit is the end of the HPB circuit that receives the electric power from the external charging device, and the first end of the buck circuit is an end of the buck circuit that receives the electric power from the external charging device; and
the protocol chip is configured to negotiate the voltage inputted by the external charging device.

11. A charging control method, wherein the control method is applied to the terminal device according to any one of claims 1 to 10, and the method comprises:
determining, by a controller in the terminal device, load power of the terminal device when the terminal device is connected to an external charging device, and controlling a switch in the terminal device to be in an ON state when the load power is less than or equal to a first preset value.

12. The method according to claim 11, further comprising:
determining, by the controller, the load power of the terminal device when the terminal device is connected to the external charging device and the switch is in the ON state, and controlling the switch to switch to an OFF state when the load power is greater than the first preset value.

13. The method according to claim 12, further comprising:
determining, by the controller, the load power of the terminal device and a power level of a battery when the terminal device is connected to the external charging device and the switch is in the OFF state, and controlling the switch to remain in the OFF state when the load power is less than or equal to the first preset value and the power level is greater than or equal to a second preset value.

14. The method according to claim 11, further comprising:
controlling, by the controller, the switch to be in the ON state when the terminal device is connected to the external charging device and when the controller determines that the terminal device is in a standby state or a power-off state.

15. The method according to claim 14, further comprising:
determining, by the controller, the load power of the terminal device and a power level of a battery when the terminal device is connected to the external charging device and the switch is in the ON state, and controlling the switch to switch to an OFF state when the load power is greater than the first preset value and the power level is less than a second preset value.

16. The method according to any one of claims 11 to 15, further comprising:
controlling, by the controller, the switch to be in the OFF state when the terminal device is disconnected from the external charging device.

17. The method according to any one of claims 11 to 16, further comprising:
determining, by the controller, a voltage inputted by the external charging device when the terminal device is connected to the external charging device; and
controlling, by the controller, a buck circuit in the terminal device to operate when the voltage is greater than or equal to a third preset value, or controlling, by the controller, a bypass circuit in the terminal device to operate when the voltage is less than the third preset value.

18. A terminal device, comprising: a memory and a controller, wherein the memory is configured to store a computer program, and the controller is configured to execute the computer program to perform the method according to any one of claims 11 to 17.

19. A computer-readable storage medium, wherein the computer-readable storage medium stores instructions, and when the instructions are executed, a computer is caused to perform the method according to any one of claims 11 to 17.

20. A computer program product, comprising a computer program, wherein when the computer program is run, an electronic device is caused to perform the method according to any one of claims 11 to 17.
